# EUROPÄISCHE PATENTANMELDUNG

(11) **EP 3 528 187 A1**
(43) Veröffentlichungstag der Anmeldung: **21.08.2019**
(21) Anmeldenummer: 19155794.1
(22) Anmeldetag: 06.02.2019
(51) Int. Cl.: G06Q 10/08

(54) **VERFAHREN ZUR IDENTIFIKATION EINES GEGENSTANDES UND BEREITSTELLUNG VON INFORMATIONEN**

(30) Priorität: 15.02.2018 DE 102018103449
(71) Anmelder: TKR Spezialwerkzeuge GmbH, 58285 Gevelsberg (DE)
(72) Erfinder: Kreischer, Torsten, 58300 Wetter (DE)
(74) Vertreter: Kalkoff & Partner

(57) **Zusammenfassung**

Die Erfindung betrifft ein Verfahren zur Identifikation eines Gegenstandes und Bereitstellung von Informationen zu dem identifizierten Gegenstand auf einem mobilen Handgerät. Hierfür ist eine Kameraeinheit zur Erstellung eines elektronischen Abbildes des zu identifizierenden Gegenstandes, eine Sende- und Empfangseinheit zur drahtlosen Datenübertragung von Informationen an eine Servereinheit und eine Anzeigeeinheit zur Informationsdarstellung von Informationen vorgesehen, mit der die folgenden Verfahrensschritte:
- Erstellung eines elektronischen Abbildes des zu identifizierenden Gegenstandes mit der Kameraeinheit,
- Übertragung des elektronischen Abbildes an eine Auswerteinheit der Servereinheit und Identifikation des Gegenstandes in der Servereinheit durch Abgleich des übermittelten Abbildes mit in einer Datenbank hinterlegten Abbildern zu identifizierender Gegenstände,
- Bereitstellung und Übermittlung von zu dem identifizierten Gegenstand in der Datenbank hinterlegten Informationen an das Handgerät sowie
- Darstellung der Informationen auf der Anzeigeeinheit
ausgeführt werden.

## Beschreibung

Die Erfindung betrifft ein Verfahren zur Identifikation eines Gegenstandes und Bereitstellung von Informationen zu dem identifizierten Gegenstand auf einem mobilen Handgerät.

In Werkstattbetrieben, insbesondere in Kraftfahrzeugwerkstätten, ist es zur Reparatur der defekten Anlagen, Geräten, Vorrichtungen oder dergleichen, in Kraftfahrzeugwerkstätten der Fahrzeuge, oftmals erforderlich, defekte Bauteile durch neue Bauteile zu ersetzen. Bei Problemen mit der Elektrik, insbesondere Fahrzeugelektrik besteht oftmals die Notwendigkeit, defekte Steckerverbindungen gegen neue auszutauschen, nachdem eine konkrete Fehlerermittlung und ggf. Fehlerbehebung an dem defekten Bauteil aufgrund dessen Komplexität wirtschaftlich unrentabel wäre. So werden bspw. defekte Stecker oder Buchsen einfach ausgetauscht.

Die Schwierigkeit bei dem Austausch von defekten Bauteilen, insbesondere defekter Stecker und Buchsen besteht dabei darin, dass aufgrund der Vielzahl unterschiedlicher Fahrzeuge und Fahrzeugvarianten eine Vielzahl unterschiedlicher Stecker und Buchsen zum Einsatz kommen. Diese Vielfalt bedingt eine hohe Herausforderung bei der Identifikation des als defekt erkannten Gegenstandes, nachdem sich die Gegenstände, insbesondere Stecker und Buchsen oftmals nur geringfügig, nämlich in nur wenigen Merkmalen voneinander unterscheiden. Auch für den Fachmann stellt die Auswahl des geeigneten Ersatzteils somit eine große Herausforderung dar, welche mit einer hohen Fehleranfälligkeit belastet ist. Eine fehlerhafte Auswahl des zu ersetzenden Bauteils führt dann zu längeren Ausfallzeiten und höheren Kosten.

Hiervon ausgehend liegt der Erfindung die Aufgabe zugrunde, ein Verfahren sowie ein System zur Identifikation eines Gegenstandes und Bereitstellung von Informationen zu dem identifizierten Gegenstand auf einem mobilen Handgerät bereitzustellen.

Die Erfindung löst die Aufgabe durch ein Verfahren mit den Merkmalen des Anspruchs 1 sowie ein System mit den Merkmalen des Anspruchs 10. Vorteilhafte Weiterbildungen des Verfahrens sowie des Systems sind in den jeweils abhängigen Ansprüchen angegeben.

Wesentlich für das Verfahren zur Identifikation des zu identifizierenden Gegenstandes und der Bereitstellung von entsprechenden Informationen zu diesem ist ein mobiles Handgerät mit
- einer Kameraeinheit zur Erstellung eines elektronischen Abbildes des zu identifizierenden Gegenstandes,
- einer Sende- und Empfangseinheit zur drahtlosen Datenübertragung von Informationen an eine Servereinheit und
- einer Anzeigeeinheit zur Informationsdarstellung von Informationen,
wobei die folgenden Verfahrensschritte:
- Erstellung eines elektronischen Abbildes des zu identifizierenden Gegenstandes mit der Kameraeinheit des mobilen Handgeräts,
- Übertragung des elektronischen Abbildes an eine Auswerteinheit der Servereinheit und Identifikation des Gegenstandes in der Servereinheit durch Abgleich des übermittelten Abbildes mit in einer Datenbank hinterlegten Abbildern zu identifizierender Gegenstände und
- Bereitstellung und Übermittlung von zu dem identifizierten Gegenstand in der Datenbank hinterlegten Informationen von der Servereinheit an das Handgerät und
- Darstellung der Informationen auf der Anzeigeeinheit des mobilen Handgeräts ausgeführt werden.

Das erfindungsgemäße Verfahren zeichnet sich dadurch aus, dass dieses unter Verwendung eines mobilen Handgerätes eine einfache und zuverlässige Identifikation von Gegenständen ermöglicht. Insbesondere bei der Verwendung des Verfahrens im Bereich von Reparaturbetrieben, insbesondere Kraftfahrzeugreparaturbetrieben kann dieses Verfahren dazu benutzt werden, um dem Werkstattmitarbeiter in einfacher, komfortabler sowie zuverlässiger Weise die Identifikation des auszutauschenden Bauteils zu erleichtern. Nach der Erstellung des elektronischen Abbildes mit der Kameraeinheit des mobilen Handgeräts durch den Werkstattmitarbeiter wird dieses über die Sende-Empfangseinheit an die Servereinheit übertragen. Innerhalb der Servereinheit erfolgt dann durch eine Auswerteinheit ein Abgleich des elektronischen Abbildes mit in einer Datenbank der Servereinheit hinterlegten Abbildern, wobei die Daten zu einem übereinstimmenden, in der Datenbank hinterlegten Gegenstand dann wiederum von der Servereinheit an das mobile Handgerät übertragen werden. Auf dessen Anzeigeeinheit, in der Regel einem elektronischen Display, werden dann die in der Datenbank hinterlegten Informationen zu dem identifizierten Gegenstand angezeigt. Die drahtlose Datenübertragung erfolgt dabei bspw. über ein Mobilfunknetz oder über eine WLAN-Verbindung innerhalb des Reparaturbetriebes.

Der Werkstattmitarbeiter ist dann in der Lage, das entsprechende Ersatzteil aus einem ggf. vorhandenen Lager zu entnehmen oder aber zu bestellen. Besonders vorteilhafterweise können dabei bereits zu den auf der Anzeigeeinheit angegebenen Informationen auch Bestellmöglichkeiten angezeigt werden, wobei besonders vorteilhafterweise der Werkstattmitarbeiter unmittelbar auf der Anzeigeeinheit die Möglichkeit hat, das gewünschte Ersatzteil bspw. über einen "Webshop" zu bestellen. Somit wird es dem Werkstattmitarbeiter in besonders komfortabler Weise ermöglicht, ein defektes Bauteil zu identifizieren und dieses sogar bei Bedarf zu bestellen, sodass dann innerhalb kürzester Zeit ein Austausch des defekten Bauteils stattfinden kann.

Die Verknüpfung der Datenbank mit einer zentralen Servereinheit bietet die Möglichkeit, durch eine zentrale Aktualisierung der verknüpften Daten dem Nutzer immer aktuelle Informationen bereitstellen zu können. Es ist somit anders als im Falle einer nur lokal auf dem mobilen Handgerät ablaufenden Identifikation nicht erforderlich, die dann auf dem Handgerät hinterlegten Informationen regelmäßig zu aktualisieren.

Die Erstellung des elektronischen Abbildes des zu identifizierenden Gegenstandes kann grundsätzlich in beliebiger Weise erfolgen, wobei der Nutzer das Handgerät mit der Kameraeinheit auf den zu identifizierenden Gegenstand richtet. Nach einer besonders vorteilhaften Ausgestaltung der Erfindung ist jedoch vorgesehen, dass die Erstellung des elektronischen Abbildes in einer auf der Anzeigeeinheit dargestellten Weise erfolgt.

Gemäß dieser Weiterbildung der Erfindung kann bspw. auf der Anzeigeeinheit des mobilen

Handgerätes ein Sucher eingeblendet werden, in dem der durch die Kameraeinheit erfasste Gegenstand als Live-Abbild dargestellt wird. Durch die Einblendung von bspw. Rahmenlinien oder Rasterlinien auf der Anzeigeeinheit bei der Erstellung des Abbildes wird dem Nutzer eine Hilfestellung geliefert, das elektronische Abbild des zu identifizierenden Gegenstandes in einem Maßstab zu erstellen, das dem Maßstab der in der Datenbank hinterlegten Abbilder entspricht. Die Anzeigeeinheit kann ferner dazu verwendet werden, um den Nutzer bei der Erstellung mehrerer Abbilder des zu identifizierenden Gegenstandes zu unterstützen. So kann der Nutzer bspw. durch entsprechende Hinweise sowie entsprechende Rahmenlinien dazu angeleitet werden, weitere Ansichten zu erstellen, die bei der Identifikation des Gegenstandes verwendet werden. So können bspw. bei der Erstellung des elektronischen Abbildes durch den Nutzer eine Draufsicht, eine Seitenansicht sowie eine Vorderansicht erstellt werden, die eine besonders zuverlässige Identifikation durch die Auswerteinheit ermöglichen. Die Einblendungen auf der Anzeigeeinheit bei der Erstellung der elektronischen Abbildung stellen ein Assistenzsystem dar.

Gemäß einer besonders vorteilhaften Ausgestaltung der Erfindung ist ferner vorgesehen, dass die Kameraeinheit bei der Erstellung des elektronischen Abbildes gegenüber dem zu identifizierenden Gegenstand in einer auf der Anzeigeeinheit vorgegebenen Weise verlagert, insbesondere verschwenkt wird.

Bei dieser vorteilhafterweise vorgesehenen Vorgehensweise zur Erstellung des elektronischen Abbildes wird während der Aufnahme des Abbildes die Kameraeinheit relativ gegenüber dem zu identifizierenden Gegenstand bewegt, wobei dieser während des Bewegungsprozesses aus mehreren Blickwinkeln aufgenommen wird. Die Bewegungsrichtung der Kameraeinheit gegenüber dem zu identifizierenden Gegenstand wird dabei dem Nutzer auf der Anzeigeeinheit angezeigt, sodass von dem zu identifizierenden Gegenstand ein standardisiertes Abbild nach Art eines Videos erstellt wird, welches es ermöglicht, den Gegenstand in besonders einfacher und zuverlässiger Weise durch die Auswerteinheit zu identifizieren. Alternativ zu der Erstellung eines Videos können während des Bewegungsprozesses auch automatisiert in Abhängigkeit von der Bewegung, Ausrichtung und Position des mobilen Handgeräts ergänzende Abbilder erstellt werden, die als Gesamtheit ein elektronisches Abbild des zu identifizierenden Gegenstandes darstellen, welches dem Abgleich in der Auswerteinheit zugrunde gelegt wird.

Nach einer Weiterbildung der Erfindung ist vorgesehen, dass das elektronische Abbild vor der Übertragung an die Auswerteinheit oder in der Auswerteinheit derart elektronisch bearbeitet, insbesondere in der Helligkeit und der Abbildungsgröße angepasst wird, dass dieses mit den in der Datenbank hinterlegten Abbildern übereinstimmt, insbesondere mit der Abbildungsgröße und Helligkeit der in der Datenbank hinterlegten Abbildern.

Gemäß dieser Weiterbildung der Erfindung werden die von dem Nutzer erstellten elektronischen Abbilder bereits vor der Übermittlung an die Auswerteinheit oder in der Auswerteinheit elektronisch bearbeitet. Bilddateien können bspw. durch geeignete Bearbeitungs-Algorithmen aufgehellt bzw. vergrößert werden, wodurch die elektronischen Abbilder des zu identifizierenden Gegenstandes an die Form der in der Datenbank hinterlegten Abbilder angepasst werden, sodass ein besonders zuverlässiger Abgleich vorgenommen werden kann. Eine elektronische Bearbeitung, bei der bspw. auch Kontrastwerte oder Schärfe angepasst werden können, erhöht die Erkennungsgenauigkeit in ergänzender Weise.

Die Ausgestaltung der in der Auswerteinheit durchgeführten Identifikation kann grundsätzlich in beliebiger Weise erfolgen, wobei verschiedene Verfahren zur Objekterkennung angewendet werden können. Nach einer besonders vorteilhaften Ausgestaltung der Erfindung ist jedoch vorgesehen, dass bei der elektronischen Bearbeitung des Abbildes mit einer automatischen Mustererkennung der Formtyp und/oder mindestens eine Objektkennzeichnung eines an dem zu identifizierenden Gegenstand angeordneten Kennzeichens ermittelt wird.

Im Falle der bspw. vorgesehenen Verwendung des Verfahrens zur Identifikation von Steckern im Kraftfahrzeugbereich stellt der Formtyp dabei die äußere Form des Steckers dar. Bei der Ermittlung der geometrischen Form des Steckers oder der Buchse können bspw. dessen Breite, Länge und Höhe sowie die Form ggf. vorhandener Absätze ermittelt werden. Die ermittelten Objektmerkmale können dann mit den Objektmerkmalen der in der Datenbank hinterlegten Gegenstände abgeglichen werden. Zusätzlich oder alternativ zur Mustererkennung über den Formtyp des Gegenstandes sieht das weitergebildete Verfahren vor, dass bei der elektronischen Bildbearbeitung eine Objektkennzeichnung des zu identifizierenden Gegenstandes ermittelt wird. Bei einer Objektkennzeichnung kann es sich dabei um bestimmte von der Form unabhängige Merkmale des zu identifizierenden Gegenstandes handeln, bspw. spezielle Markierungen, Einprägungen sowie die farbliche Ausgestaltung, aber auch auf der Oberfläche angebrachte Etiketten oder dergleichen.

Insbesondere bei einer kombinierten Erfassung des Formtyps und der Objektkennzeichnung kann die Identifikation des zu identifizierenden Gegenstandes im Rahmen der Auswerteinheit durch Abgleich mit den in der Datenbankhinterlegten Gegenständen besonders zuverlässig und zügig erfolgen, nachdem eine Fehlererkennung über eine zunehmende Anzahl übereinstimmender Merkmale reduziert werden kann.

Nach einer besonders vorteilhaften Ausgestaltung der Erfindung ist vorgesehen, dass zur Identifizierung von als Steckergehäusen ausgebildeten Gegenständen die am Steckergehäuse befindlichen Kontaktstifte und/oder die Form eines Kopplungsabschnitts des Steckergehäuses die Objektkennzeichnung bilden. Insbesondere die Verwendung der Anzahl, Ausrichtung und Anordnung der Kontaktstifte eines Steckergehäuses bzw. der Kontaktstiftaufnahmen bei einer Buchse ermöglicht eine besonders zuverlässige Identifikation des zu identifizierenden Gegenstandes.

Die Verwendung der Kontaktstifte bzw. Kontaktstiftaufnahmen zur Identifikation zeichnet sich dabei insbesondere dadurch aus, dass die durch diese definierte Objektkennzeichnung von Stecker zu Stecker, bzw. Buchse zu Buchse sehr unterschiedlich ausfällt und damit besonders gut als Identifikationsmerkmal geeignet ist. So bilden insbesondere Stecker/Buchsen mit einer mehrreihigen Anordnung der Kontaktstifte/Kontaktstiftaufnahmen besondere durch diese definierte Muster aus. Die in der Regel metallische Ausgestaltung der Kontaktstifte bzw. Kontaktstiftaufnahmen führt überdies zu einem guten Reflexionsverhalten, was eine Erfassung der Anordnung der Kontaktstifte bzw. Kontaktstiftaufnahmen bei der Erstellung des elektronischen Abbildes begünstigt. Verschmutzungen, die das Reflexionsverhalten einschränken, sind überdies nicht zu erwarten, da die Kontaktstifte und Kontaktstiftaufnahmen im verbundenen Zustand der Stecker und Buchsen vor äußeren Einflüssen geschützt sind.

Die Verwendung der Kontaktstifte, bzw. Kontaktstiftaufnahmen zur Identifizierung der zu identifizierenden Gegenstände zeichnet sich somit insbesondere dadurch aus, dass diese im Betrieb in dem eine Steckerverbindung besteht, nahezu keinerlei Verschmutzung ausgesetzt sind, sodass nach dem Auflösen der Steckerverbindung diese Objektkennzeichnung keine Verschmutzung aufweist und daher eine gute Identifikation dieser Objektkennzeichnung erfolgen kann. Ein reinigender Eingriff des zu identifizierenden Gegenstandes, insbesondere Steckers durch den Nutzer ist daher nicht erforderlich.

Als alternatives oder weiteres Merkmal zur Steigerung der Identifikationsmöglichkeiten dient die Form des Kopplungsabschnitts, welche in der Regel individuell ausgestaltet ist und dabei bspw. speziell angeordnete Nuten oder Rastmarken zur Steckerverbindung aufweist.

Nach einer weiteren Ausgestaltung der Erfindung ist ferner vorgesehen, dass die Objektkennzeichnung durch eine an dem Gegenstand angeordnete Codierung gebildet ist. Bei einer Codierung kann es sich neben einem zweidimensionalen Code, wie einem Barcode oder QR-Code, auch um einen dreidimensionalen Code handeln, welcher vorstehende Erhebungen, bspw. in Form von Punkten oder Stegen aufweist und welche besonders vorteilhafterweise mit reflektierenden Beschichtungen versehen sind, sodass eine besonders zuverlässige Erkennung dieser Objektkennzeichnung im Rahmen der Erstellung des elektronischen Abbildes erfolgen kann. Die Verwendung einer an dem Gegenstand angeordneten Codierung gewährleistet somit in zuverlässiger Weise eine Identifikation des Gegenstandes. Eine Verwendung der Codierung in ergänzender Weise steigert dabei die Identifikationsrate und -geschwindigkeit in ergänzender Weise.

Nach einer weiteren Ausgestaltung der Erfindung ist ferner vorgesehen, dass der zu identifizierende Gegenstand während der Erstellung des elektronischen Abbildes durch eine an dem Handgerät angeordnete Beleuchtungseinheit angestrahlt wird. Die Verwendung einer Beleuchtungseinheit steigert die Qualität der erstellten elektronischen Abbilder und damit die Qualität und Zuverlässigkeit des durchgeführten Identifikationsvorgangs. Durch die Beleuchtungseinheit wird eine gleichmäßige Ausleuchtung des zu identifizierenden Objekts bei der Erstellung des Abbildes gewährleistet.

Nach einer weiteren Ausgestaltung der Erfindung ist ferner vorgesehen, dass in der Auswerteinheit zur Identifizierung des Gegenstandes ein Farbabgleich zwischen dem elektronischen Abbild des zu identifizierenden Gegenstandes und den in der Datenbank hinterlegten Abbildern der zu identifizierenden Gegenstände vorgenommen wird. Eine Identifikation der Farbe des zu identifizierenden Gegenstandes und ein entsprechender Abgleich mit den in der Datenbank hinterlegten Gegenständen steigert ebenfalls die Identifikationsrate in ergänzender Weise, nachdem über die Farbe eine Eingrenzung der zu identifizierenden Gegenstände, insbesondere Stecker vorgenommen werden kann. Zudem stellt ein Farbabgleich ein besonders einfaches und zuverlässiges Identifikationsmerkmal dar.

Gemäß der Erfindung weist das System zur Identifikation eines Gegenstandes und Bereitstellung von Informationen zu dem identifizierten Gegenstand ein mobiles Handgerät und eine Servereinheit auf, die grundsätzlich zur Durchführung des Verfahrens gemäß einem oder mehreren der Ansprüchen 1 bis 9 ausgebildet ist.

Das System zeichnet sich durch seine Einfachheit und Kompaktheit aus, wobei das System dem Benutzer, bspw. im Werkstattbetrieb dem Werkstattmitarbeiter, die Möglichkeit bietet, einen auszutauschenden Gegenstand in besonders einfacher und komfortabler Weise zu identifizieren und zusätzliche Informationen über die Anzeigeeinheit auf dem Handgerät zu erhalten. In besonders vorteilhafter Weise besteht über das Handgerät zudem die Möglichkeit, unmittelbar eine Bestellung des auszutauschen Gegenstandes auszuführen, wobei das mobile Handgerät dann über eine geeignete Verbindung, bspw. Internetverbindung, mit einem Webshop verbunden ist, in dem der identifizierte Gegenstand komfortabel bestellt werden kann.

Das System zu Identifikation weist dabei besonders vorteilhafterweise
- ein mobiles Handgerät auf, das
   - eine Kameraeinheit zur Erstellung eines elektronischen Abbildes des zu identifizierenden Gegenstandes,
   - eine Sende- und Empfangseinheit zur drahtlosen Datenübertragung von Informationen an und von einer Servereinheit und
   - eine Anzeigeeinheit zur Informationsdarstellung von Informationen aufweist.

Zudem weist das System besonders vorteilhafterweise eine Servereinheit auf, die
- eine Datenbank mit hinterlegten Abbildern zu den zu identifizierenden Gegenständen und
- eine Auswerteinheit zur Identifikation des Gegenstandes in der Servereinheit durch Abgleich des zu übermittelnden Abbildes mit den in der Datenbank hinterlegten Abbildern auf.

Das derart ausgestaltete System ermöglicht es dem Nutzer allein mit dem mobilen Handgerät bspw. im Werkstattbetrieb, den auszutauschenden Gegenstand zu identifizieren. Dieses kann z.B. im Kraftfahrzeugwerkstattbetrieb direkt am Fahrzeug erfolgen, ohne dass hierfür ein Ausbau erforderlich ist. Das mobile Handgerät zeichnet sich dabei durch seine hohe Flexibilität und Handhabbarkeit aus. Die Daten des zu identifizierenden Gegenstandes werden als elektronisches Abbild direkt von dem Handgerät an eine Servereinheit versendet, die bspw. lokal im Betrieb oder aber in einer Zentralstelle vorhanden sein kann, über die das Handgerät bspw. über Mobilfunkverbindung oder eine WLAN-Verbindung kommuniziert.

Nach einer weiteren Ausgestaltung der Erfindung ist ferner vorgesehen, dass das Handgerät des Systems zur manuellen Eingabe von Informationen ausgebildet ist. Diese Ausgestaltung der Erfindung ermöglicht es bspw. dem Nutzer dem elektronischen Abbild weitere Informationen hinzuzufügen, wobei dies bspw. durch eine standardisierte Abfrage auf der Anzeigeeinheit erfolgen kann, bei der ein bspw. auf dem mobilen Handgerät ablaufendes Programm Informationen zu bestimmten Merkmalen des Gegenstandes ergänzend zu dem elektronischen Abbild abfragt und zum Abgleich an die Auswerteinheit übermittelt.

Nach einer weiteren Ausgestaltung der Erfindung ist ferner vorgesehen, dass das mobile Handgerät Mittel zur Feststellung seiner räumlichen Orientierung und/oder zur Ermittlung der geografischen Position aufweist. Eine Feststellung der räumlichen Orientierung des mobilen Handgeräts, d. h. dessen Ausrichtung gegenüber dem zu identifizierenden Gegenstand bei der Erstellung des elektronischen Abbildes ermöglicht eine besonders zuverlässige Erstellung eines elektronischen Abbildes, wenn dieses während der Erstellung gegenüber dem zu identifizierenden Gegenstand bewegt werden soll. Die räumliche Orientierung kann dabei bspw. über einen integrierten Gyroskopen festgestellt werden.

Die Ermittlung der geographischen Position, bspw. über geeignete GPS-Sensoren, ermöglicht es festzustellen, an welchem Ort das elektronische Abbild erstellt wurde. Über eine regionale Eingrenzung, bspw. eine Eingrenzung nach Ländern kann dann bspw. einen Ausschluss von Gegenständen innerhalb der Auswerteinheit vorgenommen werden, welcher bspw. aufgrund eines regional begrenzten Einsatzes nicht in Frage kommen können, sodass grundsätzlich ein besonders zügiger Abgleich vorgenommen werden kann.

Nach einer besonders vorteilhaften Ausgestaltung der Erfindung ist ferner vorgesehen, dass das mobile Handgerät durch ein Smartphone gebildet ist. Die Verwendung eines Smartphones zeichnet sich dabei dadurch aus, dass diese in der Regel bereits eine Anzeigeeinheit und eine Kameraeinheit aufweisen, sodass die Erstellung des elektronischen Abbildes dann unter Verwendung eines auf dem Mobilgerät ablaufenden Programms, einer Programmapplikation (App) erfolgen kann. Während der Erstellung des elektronischen Abbildes können bspw. auf der Anzeigeeinheit des mobilen Gerätes durch das Programm, die App, Rahmenlinien oder Anwendungshinweise eingeblendet werden. Das Programm kann ferner eine Verknüpfung zu einem Webshop herstellen, über die über das Smartphone dann in einfacher Weise direkt eine Bestellung des zu identifizierenden Gegenstandes ausgeführt werden kann.

Ein Ausführungsbeispiel der Erfindung wird nachstehend mit Bezug auf eine Zeichnung erläutert. In der Zeichnung zeigt:

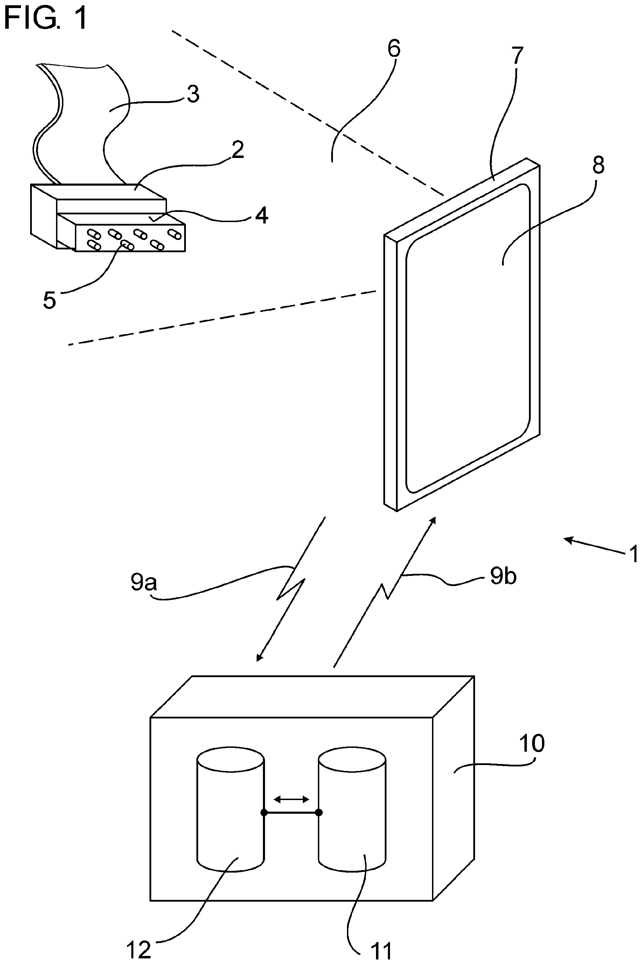

- Figur 1: eine schematische Darstellung des Systems zur Identifizierung eines als Stecker ausgebildeten Gegenstandes.

Ein in Figur 1 schematisch dargestelltes System zur Identifikation eines Gegenstandes 2 und Bereitstellung von Informationen zu diesem Gegenstand 2 weist ein als Smartphone 7 ausgebildetes mobiles Handgerät sowie eine Servereinheit 10 auf.

Das Smartphone 7 ermöglicht es, mittels einer hier nicht dargestellten Kameraeinheit von dem im Kamerabereich 6 positionierten Steckergehäuse 2 ein elektronisches Abbild zu erstellen. Bei der Erstellung des elektronischen Abbildes des Steckergehäuses 2 wird der Nutzer dabei über eine auf eine Anzeigeeinheit 8 des Smartphones 7 abgebildete Anweisungen unterstützt, sodass das elektronische Abbild des Steckergehäuses 2 bestimmte Rahmenbedingungen erfüllt.

Im vorliegenden Ausführungsbeispiel werden dabei bei der Erstellung des elektronischen Abbildes des Steckergehäuses 2 zudem die Ausgestaltung eines Kopplungsabschnitts 4 sowie die Anordnung von Kontaktstiften 5 erfasst, welche im Rahmen der Identifikation des Steckergehäuses 2 innerhalb einer Auswerteinheit 11 einer Servereinheit 10 dazu genutzt werden, um eine zuverlässige Identifikation des Steckergehäuses 2 vorzunehmen.

Das in dem Smartphone 7 erstellte elektronische Abbild wird über eine drahtlose Verbindung, bspw. eine Mobilfunkverbindung an die Servereinheit 10 übertragen, wobei die Datenübertragung 9a, 9b von dem Smartphone zur Servereinheit 10 und umgekehrt erfolgen kann. Innerhalb der Servereinheit 10 wird das elektronische Abbild innerhalb der Auswerteinheit 11 analysiert und bspw. im Rahmen einer Mustererkennung sowie unter Berücksichtigung der Objektkennzeichnung, vorliegend der Anordnung der Kontaktstifte 5 und der Ausgestaltung des Kopplungsabschnitts 4 mit den in einer Datenbank 12 hinterlegten elektronischen Abbildern von Steckergehäusen abgeglichen. Durch die Auswerteinheit 11 wird dann der mit dem elektronischen Abbild des Steckergehäuses 2 übereinstimmende Stecker ermittelt und Informationen über diesen Stecker werden von der Servereinheit 10 wieder an das Smartphone 7 übermittelt, wo dem Nutzer auf der Anzeigeeinheit 8 Informationen zu dem Stecker dargestellt werden.

Die Erstellung des elektronischen Abbildes und die Kommunikation mit der Servereinheit 10 erfolgt bspw. durch eine auf dem Smartphone 7 ablaufende App, die den Nutzer unterstützt. Die App bietet zusätzlich die Möglichkeit, den identifizierten Gegenstand über einen in die App integrierten Webshop direkt zu bestellen.

### Bezugszeichenliste

- 1: System zur Identifikation eines Gegenstandes und Bereitstellung von Informationen
- 2: Steckergehäuse / Gegenstand
- 3: Kabel
- 4: Kopplungsabschnitt
- 5: Kontaktstifte
- 6: Kamerabereich
- 7: Smartphone / mobiles Handgerät
- 8: Anzeigeeinheit
- 9a/9b: Datenübertragung
- 10: Servereinheit
- 11: Auswerteinheit
- 12: Datenbank

## Patentansprüche

1. Verfahren zur Identifikation eines Gegenstandes und Bereitstellung von Informationen zu dem identifizierten Gegenstand auf einem mobilen Handgerät mit
- einer Kameraeinheit zur Erstellung eines elektronischen Abbildes des zu identifizierenden Gegenstandes (2),
- einer Sende- und Empfangseinheit zur drahtlosen Datenübertragung von Informationen an eine Servereinheit (10) und
- einer Anzeigeeinheit (8) zur Informationsdarstellung von Informationen,
umfassend die folgenden Verfahrensschritte:
- Erstellung eines elektronischen Abbildes des zu identifizierenden Gegenstandes (2) mit der Kameraeinheit,
- Übertragung des elektronischen Abbildes an eine Auswerteinheit (11) der Servereinheit (10) und Identifikation des Gegenstandes (2) in der Servereinheit (10) durch Abgleich des übermittelten Abbildes mit in einer Datenbank (12) hinterlegten Abbildern zu identifizierender Gegenstände,
- Bereitstellung und Übermittlung von zu dem identifizierten Gegenstand (2) in der Datenbank (12) hinterlegten Informationen an das Handgerät (7) sowie
- Darstellung der Informationen auf der Anzeigeeinheit (8).

2. Verfahren nach Anspruch 1, **dadurch gekennzeichnet, dass** die Erstellung des elektronischen Abbildes in einer auf der Anzeigeeinheit (8) dargestellten Weise erfolgt.

3. Verfahren nach Anspruch 1 oder 2, **dadurch gekennzeichnet, dass** die Kameraeinheit bei der Erstellung des elektronischen Abbildes gegenüber dem zu identifizierenden Gegenstand (2) in einer auf der Anzeigeeinheit (8) vorgegebenen Weise verlagert, insbesondere verschwenkt wird.

4. Verfahren nach einem oder mehreren der vorhergehenden Ansprüche, **dadurch gekennzeichnet, dass** das elektronische Abbild vor der Übertragung an die Auswerteinheit (11) oder in der Auswerteinheit (11) derart elektronisch bearbeitet, insbesondere in der Helligkeit und der Abbildungsgröße angepasst wird, dass es mit den in der Datenbank hinterlegten Abbildern übereinstimmt, insbesondere mit der Abbildungsgröße und Helligkeit der in der Datenbank hinterlegten Abbildern.

5. Verfahren nach einem oder mehreren der vorhergehenden Ansprüche, **dadurch gekennzeichnet, dass** bei der elektronischen Bearbeitung des Abbildes mit einer automatischen Mustererkennung der Formtyp und/oder mindestens eine Objektkennzeichnung eines an dem zu identifizierenden Gegenstand angeordneten Kennzeichens ermittelt wird.

6. Verfahren nach einem oder mehreren der vorhergehenden Ansprüche, **dadurch gekennzeichnet, dass** zur Identifizierung von als Steckergehäusen (2) ausgebildeten Gegenständen die am Steckergehäuse (2) befindlichen Kontaktstifte (5) und/oder die Form eines Kopplungsabschnitts (4) des Steckergehäuses (2) die Objektkennzeichnung bilden.

7. Verfahren nach einem oder mehreren der vorhergehenden Ansprüche, **dadurch gekennzeichnet, dass** die Objektkennzeichnung durch eine an dem Gegenstand angeordnete Codierung gebildet ist.

8. Verfahren nach einem oder mehreren der vorhergehenden Ansprüche, **dadurch gekennzeichnet, dass** der zu identifizierende Gegenstand (2) während der Erstellung des elektronischen Abbildes durch eine an dem Handgerät (7) angeordnete Beleuchtungseinheit angestrahlt wird.

9. Verfahren nach einem oder mehreren der vorhergehenden Ansprüche, **dadurch gekennzeichnet, dass** in der Auswerteinheit (11) zur Identifizierung des Gegenstandes (2) ein Farbabgleich zwischen dem elektronischen Abbild des zu identifizierenden Gegenstandes (2) und den in der Datenbank (12) hinterlegten Abbildern der zu identifizierenden Gegenstände vorgenommen wird.

10. System zur Identifikation eines Gegenstandes und Bereitstellung von Informationen zu dem identifizierten Gegenstand (2), mit einem mobilen Handgerät (7) und einer Servereinheit (10) die zur Durchführung eines Verfahrens gemäß einem oder mehreren der Ansprüche 1 bis 9 ausgebildet sind.

11. System nach Anspruch 10, **gekennzeichnet durch**
- ein mobiles Handgerät (7), aufweisend
- eine Kameraeinheit zur Erstellung eines elektronischen Abbildes des zu identifizierenden Gegenstandes (2),
- eine Sende- und Empfangseinheit zur drahtlosen Datenübertragung (9a, 9b) von Informationen an und von einer Servereinheit (10) und
- eine Anzeigeeinheit (8) zur Informationsdarstellung von Informationen
und
- eine Servereinheit (10), aufweisend
- eine Datenbank (12) mit hinterlegten Abbildern zu den zu identifizierenden Gegenständen und
- eine Auswerteinheit (11) zur Identifikation des Gegenstandes (2) in der Servereinheit (10) durch Abgleich des übermittelten Abbildes mit den in der Datenbank (12) hinterlegten Abbildern.

12. System nach Anspruch 10 oder 11, **dadurch gekennzeichnet, dass** das mobile Handgerät (7) zur manuellen Eingabe von Informationen ausgebildet ist.

13. System nach einem oder mehreren der Ansprüche 10 bis 12, **dadurch gekennzeichnet, dass** das mobile Handgerät (7) Mittel zur Feststellung seiner räumlichen Orientierung und/oder zur Ermittlung der geographischen Position aufweist.

14. System nach einem oder mehreren der Ansprüche 10 bis 13, **dadurch gekennzeichnet, dass** das mobile Handgerät durch ein Smartphone (7) gebildet ist.
